Europäisches Patentamt

European Patent Office

Office européen des brevets

(19)

(11) Veröffentlichungsnummer: **0 240 460**
**A2**

(12) **EUROPÄISCHE PATENTANMELDUNG**

(21) Anmeldenummer: 87810175.7

(22) Anmeldetag: 27.03.87

(51) Int. Cl.⁴: **C 08 G 59/32**
C 08 G 59/04, C 08 G 59/54

(30) Priorität: 02.04.86 US 847338

(43) Veröffentlichungstag der Anmeldung:
07.10.87 Patentblatt 87/41

(84) Benannte Vertragsstaaten:
CH DE FR GB LI NL

(71) Anmelder: CIBA-GEIGY AG
Klybeckstrasse 141
CH-4002 Basel (CH)

(72) Erfinder: Gannon, John A.
Elmcrest Drive
Danbury, CT 06811 (US)

Brytus, Vincent
RFD 3 Box 437 Hamlin Road
Mahopac New York 10541 (US)

Puglisi, Joseph S.
P.O. Box 335 Forest Lane
Crompond New York 10517 (US)

(54) Bei Raumtemperatur härtbare polyfunktionelle aliphatische Glycidylether-Stoffgemische.

(57) Stoffgemische enthaltend polyfunktionelle aliphatische Glycidylether, welche bei Raumtemperatur mit Polyamidoamin-härtern gehärtet werden, weisen eine unerwartet hohe Beständigkeit gegen Glanzverlust bei Bewitterung auf. Die gehärteten Produkte haben zudem gute mechanische und chemische Eigenschaften.

EP 0 240 460 A2

## Beschreibung

### Bei Raumtemperatur härtbare polyfunktionelle aliphatische Glycidylether-Stoffgemische

Ueberzüge aus polyfunktionellen aliphatischen Glycidylethern, welche mit Polyamidoaminhärtern gehärtet werden, weisen eine hohe Beständigkeit gegen Glanzverlust bei Anwendungen im Freien auf.

Gehärtete Epoxidharzsysteme auf der Basis von Bisphenol A und anderen aromatischen Polyolen weisen im allgemeinen gute mechanische Eigenschaften auf, haben aber eine relativ schlechte Beständigkeit gegenüber Bewitterung bei Anwendungen im Freien oder bei UV Bestrahlung.

Es ist bekannt, dass solche Verwitterungsprobleme mit den verwendeten, aromatische Einheiten enthaltenden Bisphenol A Epoxidharzen im Zusammenhang stehen, und deshalb wurden Epoxidharze ohne aromatische Einheiten hergestellt. Solche von aliphatischen Polyolen abgeleitete Harze werden in Lee und Neville, Handbook of Epoxy Resins, McGraw-Hill, New York, 1967, S. 2-16 beschrieben.

U.S. 4,388,209 und 4,339,389 beschreiben hochmolekulare Polyglycidylether, welche durch Hydroformylierung von Oleylalkohol und verwandten ungesättigten Alkenolen und anschliessende Glycidylierung des Polyols hergestellt werden. Es wird gesagt, dass solche Glycidylether durch eine Vielfalt von Härtern, wie z.B. Amine, Anhydride, Säuren, Polyamonamide, Melamine oder Mercaptane, gehärtet werden können, wobei nur die Härtung mit Aminen spezifisch beschrieben ist.

Aliphatische Epoxidharze weisen im allgemeinen eine bessere Wetterbeständigkeit als aromatische Harze auf. Ihre anderen Eigenschaften sind aber, wie im U.S. 4,540,752 beschrieben, meistens denen der aromatischen Harze unterlegen.

U.S. 4,528,345 beschreibt cycloaliphatische Harze, welche durch Hydrierung von Bisphenol A Glycidylethern hergestellt werden. Es wird darin aber ausgeführt, dass eine Induktions-Vorreaktionszeit von etwa einer Stunde bei der Härtung dieser Harze mit Polyamidhärtern unbedingt nötig ist, um zu vermeiden, dass der gehärtete Ueberzug schnell den Glanz verliert und Oberflächenschäden, wie weissliche Verfärbung und Flecken aufweist.

J. Bersier et al., FATIPEC, 1970, 255-276 beschreiben die Verwendung von aliphatischen Glycidylethern in kalthärtbaren, lösungsmittelfreien Stoffgemischen für Ueberzüge und Härtung mit cycloaliphatischen Polyaminen, wobei die gehärteten Ueberzüge sich durch eine hohe Lösungsmittelbeständigkeit auszeichnen. Aehnliche Stoffgemische wurden auf ihren Farb- und Glanzerhalt sowie Wetterbeständigkeit im Freien getestet. T. Audykowski et al., FATIPEC, 1974, 109-116 beschreiben die ausgezeichnete Beständigkeit solcher Ueberzüge gegen Verfärbung, führen aber aus, dass nach nur wenigen Monaten im Freien ein sehr hoher Glanzverlust stattfindet. Audykowski et al. beschreiben auch die Härtung solcher aliphatischer Glycidylether mit Anhydridhärtern bei erhöhten Temperaturen (180°C), wobei die Glanzbeständigkeit bei Bewitterung etwas besser ist.

R.S. Bauer, FATIPEC, 1980, 102-122, beschreibt pigmententhaltende Beschichtungen aus einem Diglycidylether von hydriertem Bishenol A (EPONEX DRH-151.2, Shell), welche mit einem hydrierten Polyaminoamid (VERSAMID 1540, Henkkel), oder einem konventionellen Polyamid (UNI-Rez 2188, Union Camp) gehärtet wurden. Diese Beschichtungen weisen eine gute Glanzbeständigkeit nach Bewitterung (Weatherometer und Quick Ultra-violet, QUV-Test) auf.

Polyamidoaminhärter werden durch Dimerisierung von Tallölfettsäuren und anschliessende Umsetzung der dimeren Säuren mit aliphatischen Aminen, wie z.B. Diethylentriamin, hergestellt. Solche Härter werden von Brytus, Modern Paint and Coatings, 74 (10), 172 (1984) beschrieben. Diese Härter sind unter den Bezeichnungen Polyamide, Polyaminoamide oder Polyamidoamine bekannt.

Die vorliegende Erfindung betrifft ein bei Raumtemperatur härtbares Epoxidharz-Stoffgemisch enthaltend (a) einen Polyglycidylether eines aliphatisichen Polyols mit 3 bis 12 C-Atomen und mindestens 3 Hydroxylgruppen, wobei der Polyglycidylether mindestens 2 Oxirangruppen pro Molekül hat, und (b) eine wirksame Menge eines Polyamidoamin-Härters.

Die vorliegende Erfindung betrifft auch ein Verfahren zur Herstellung eines Schutzüberzugs oder eines Oberflächenlacks im Automobilbau, indem ein Stoffgemisch enthaltend einen Polyglycidylether eines aliphatischen Polyols mit 3 bis 12 C-Atomen und mindestens 3 Hydroxylgruppen, wobei der Polyglycidylether mindestens 2 Oxirangruppen pro Molekül hat, und eine wirksame Menge eines Polyamidoamin-Härters, bei 20-200°C, vorzugsweise 20-45°C, während 7-14 Tagen umgesetzt wird.

Die vorliegenden Polyglycidylether werden aus den Polyolen mit 3 bis 12 Kohlenstoffatomen durch konventionelle Glycidylierung mit Epichlorhydrin und anschliessende basische Dehydrochlorierung des intermediären Chlorhydrins hergesellt. Beispiele solcher Polyole sind Alkantriole, Alkantetraole Alkanpentaole, Alkanhexaole sowie Disaccharide, wie z.B. Glycerin, Trimethylolpropan, Trimethylolethan, Diglycerin, Sorbit, Mannit, Pentaerythrit, Dipentaerythrit, Sucrose, Fructose, 1,2,6-Hexantriol, Glucose, Lactose und Maltose.

Bevorzugte Polyole sind Alkantriole, Alkantetraole, Alkanpentaole oder Alkanhexaole, insbesondere Alkantetraole oder Alkanhexaole. Besonders bevorzugt sind Pentaerythrit und Sorbit.

Es wurde nun gefunden, dass mit den erfindungsgemässen härtbaren Stoffgemischen hergestellte Beschichtungen unerwartet gute Eigenschaften bei Anwendungen im Freien, insbesondere eine sehr hohe Glanzbeständigkeit aufweisen.

Ein weiterer Vorteil der vorliegenden Stoffgemische ist due gute Verträglichkeit der verwendeten Epoxidharze und Härter. Bei Verwendung aromatischer Epoxidharze mit Polyamidhärtern wird im allgemeinen nicht eine so gute Verträglichkeit erreicht. Aufgrund dieser guten Verträglichkeit können Beschichtunen mit guten physikalischen und chemischen Eigenschaften auch ohne besondere Auflagen und Vorsichtsmassnahmen erhalten werden. So entfällt auch die bei der Verwendung von aromatischen Epoxidharzen und Amidoaminhärtern für das Erzielen von nützlichen Eigenschaften benötigte Induktionszeit.

Die verbesserte Dauerhaftigkeit des Glanzes der vorliegenden Stoffgemische bleibt über einen grossen Bereich der Harz-Härter Mengenverhältnisse erhalten. Sogar ein zweifacher oder dreifacher Ueberschuss relativ zu den theoretischen 1:1 Mengen (Epoxidäquivalentgewicht: aktiver Wasserstoffäquivalentgewicht im Härter) der Reaktionspartner ergibt immer noch gehärtete Stoffe mit annehmbaren Eigenschaften.

Folglich ist die Anwendung der vorliegenden Stoffgemische sehr einfach, und die erhaltenen gehärteten Produkte haben unabhängig von der Stöchiometrie der Reaktionspartner immer noch gute Eigenschaften.

Beispiel 1: Polyglycidylether des Sorbits

Eine Suspension von 18,2 g Sorbit in 60 ml 1,4-Dioxan wird zum Rückfluss erhitzt. Nach Zugabe von 0,25 ml Bortrifluorid-Diethyletherat werden unter Rühren und Rückfluss 27,8 g Epichlorhydrin zugetropft. Das Molverhältnis von Sorbit zu Epichlorhydrin ist 0,1 zu 0,3. Eine exotherme Reaktion setzt ein, und Sorbit geht allmählich in Lösung. Nach Beendigung der Zugabe von Epichlorhydrin wird das Reaktionsgemisch 100 Minuten rückflussiert. Nach dem Rückfluss können im Reaktionsgemisch praktisch keine Epoxidgruppen mehr nachgewiesen werden. Das Lösungsmittel wird unter reduziertem Druck (65 mm Hg) bei 70°C entfernt. Der Rest wird in 60 g Toluol gelöst und bei 50-55°C und 60-80 mm Hg mit 30 g einer 50%igen wässrigen Natriumhydroxidlösung dehydrohalogeniert. Das dabei entstandene Natriumchlorid wird abfiltriert, und der Rückstand wird mit Toluol gut gewaschen. Nach Entfernung des Toluols im Vakuum werden 34,4 g (98,3 %) des hellgelben Harzes mit einem Epoxidgehalt von 0,58 Aequivalenten/100 g (67,7 % des theoretischen Gehalts) erhalten.

Beispiel 2: Polyglycidylether des Pentaerythrits

Ein Gemisch aus 3,4 g fein vermahlenem Pentaerythrit in 10 g 1,4-Dioxan wird unter Rühren zum Rückfluss erhitzt. Nach Zugabe von 0,23 g Zinntetrachlorid, werden 12,95 g Epichlorhydrin unter gleichzeitigem Rühren und Rückfluss zugetropft. Das Molverhältnis von Pentaerythrit zu Epichlorhydrin ist 0,025 zu 0,14. Das Pentaerythrit wird im Laufe der Reaktion gelöst. Das Gemisch wird auf 50°C gekühlt, und 1,4-Dioxan wird unter reduziertem Durck (60 mm Hg) entfernt. Im Rückstand können keine Epoxidgruppen nachgewiesen werden. Toluol (22 g) wird zugegeben und das Gemisch wird unter gleichzeitiger tropfenweise Zugabe von 12 g einer 50%igen wässrigen Natriumhydroxidlösung bei 55-60°C/100 mm Hg durch einen Wasserabscheider destilliert. Insgesamt werden 7,1 g Wasser abgeschieden. Nach Beendigung der azeotropen Destillation werden 15 g Wasser zugegeben. Das Gemisch wird gut gerührt und dann bis zur Phasenbildung stehengelassen. Die Toluollösung wird mit 4 g einer 50%igen wässrigen Natriumdihydrogenphosphatlösung gewaschen, abgetrennt und über wasserfreiem Nariumsulfat getrocknet. Das Toluol wird bei 15 mm Hg bis zu einer Temperatur von 135°C destilliert. Es werden 10,9 g (85,9 % der Theorie) des Harzes als gelbe Flüssigkeit mit den folgenden Eigenschaften erhalten:
Epoxidgehalt: 7,15 Aequivalenten/kg (90,9 % der Theorie)
Chlorgehalt: 10,45 %
Viskosität (25°C): 460 mPas
Farbzahl nach Gardner/Holdt: 7

Beispiele 3-14:

Nach dem im Beispiel 1 beschriebenen allgemeinen Verfahren werden die foglenden polyfunktionellen aliphatischen Glycidylether durch Umsetzung des bezeichneten Polyols mit Epichlorhydrin und anschliessende Dehydrohalogenierung unter Verwendung einer Alkalimetallhydroxidlösung hergestellt.

| Beispiel | Polyol |
|----------|--------|
| 3 | Glycerin |
| 4 | Trimethylolpropan |
| 5 | 1,2,6-Hexantriol |
| 6 | Dipantaerythrit |
| 7 | Fructose |
| 8 | Sucrose |
| 9 | Trimethylolethan |
| 10 | Mannitol |
| 11 | Diglycerin |
| 12 | Glucose |
| 13 | Lactose |
| 14 | Maltose |

Beispiel 15:

100 g des im Beispiel 1 hergestellen flüssigen Epoxidharzes werden von Hand mit 125 g eines Polyamidoaminhärters (Amingehalt von 3,8 Aequivalenten/kg, Viskosität bei 25°C von 4000 mPas) bei Raumtemperatur gemischt. Diese Formulierung wird sogleich mit einem konventionellen Walzenbeschichter mit von unten wirkender Rakel auf eine mit einer Grundierschicht versehene Stahlplatte aufgetragen, wobei ein Film mit einer Trockenfilmdicke von 0,1524 mm erhalten wird. Die beschichtete Platte wird bei Raumtemperatur während 7 Tagen gehalten, um einen ausgehärteten Ueberzug zu erhalten. Die Topfzeit des Gemisches, definiert als die Zeit in Minuten vom Beginn des Mischens des Harzes mit dem Härter bis zum Zeitpunkt bei dem der Gelometer (Techne Gelometer, Princeton, NJ) stoppt, d.h. bis zum Zeitpunkt zu dem sich die ins Gemisch eingetauchte Sonde nicht mehr bewegen kann, beträgt 32 Minuten. Mit einem Landolt Tester, der eine unter Gewicht stehende Nadel über die beschichtete Stahlplatte zieht, um das Schneiden der Beschichtung mit einem Messer zu simulieren, wird die Aushärtungszeit der Beschichtung bestimmt. Sie beträgt 102 Minuten. Der Anfangsspiegelglanz (gemessen nach ASTM D523) beträgt bei einem Winkel von 60° 96, und die Anfangsfarbe (gemssen nach ASTM D2244) beträgt 1,9. Die Beständigkeit der Beschichtung gegen Verfärbung und gegen Glanzverlust durch Bewitterung wird durch beschleunigte Bewitterung im QUV Apparat während 2200 Stunden, durch beschleunigte Bewitterung in einem Xenonbogen Weatherometer während 1300 Stunden, oder durch den Einsatz im Freien bei einem Winkel von 45° während eines Jahres in der Sonne im Süden Floridas gemessen. Es werden folgende Testresultate erhalten:

| | Anfang | Nach 2200 Std. im QUV | Nach 1300 Std. Weatherometer | Nach 1 Jahr im Süden Floridas |
|---|---|---|---|---|
| 60° Glanz (%) | 96 | 85 | 92 | 50 |
| Farbe | 1,9 | 5,7 | 15,2 | 9,8 |

Sogar unter den anspruchsvollsten Bewitterungsbedingungen im Freien bei hoher Temperatur, starkem Regenfall und hoher Luftfeuchtigkeit sowie starker Sonnenlichteinstrahlung im Süden Floridas bewahren die mit den erfindungsgemässen Stoffgemischen hergestellten Beschichtungen immer noch mehr als die Hälfte des anfänglichen Glanzes.

**Patentansprüche**

1. Bei Raumtemperatur härtbares Epoxidharz-Stoffgemisch enthaltend

(a) einen Polyglycidylether eines aliphatischen Polyols mit 3 bis 12 C-Atomen und mindestens 3 Hydroxylgruppen, wobei der Polyglycidylether mindestens 2 Oxirangruppen pro Molekül hat, und

(b) eine wirksame Menge eines Polyamidoamin-Härters.

2. Stoffgemisch nach Anspruch 1, worin das Polyol der Komponente (a) ein Alkantetraol oder ein Alkanhexaol ist.

3. Stoffgemisch nach Anspruch 2, worin das Polyol Petaerythrit oder Sorbit ist.

4. Verfahren zur Herstellung eines Schutzüberzugs oder eines Oberflächenlacks im Automobilbau, indem ein Stoffgemisch enthaltend einen Polyglycidylether eines aliphatisichen Polyols mit 3 bis 12 C-Atomen und mindestens 3 Hydroxylgruppen, wobei der Polyglycidylether mindestens 2 Oxirangruppen pro Molekül hat, und eine wirksame Menge eines Polyamidoamin-Härters, bei 20-200°C während 7-14 Tagen umgesetzt wird.

5. Verfahren nach Anspruch 4, worin die Umsetzung bei 20-45°C erfolgt.

6. Verfahren nach Anspruch 4, worin das Polyol ein Alkantetraol oder ein Alkanhexaol ist.

7. Verfahren nach Anspruch 6, worin das Polyol Pentaerythrit oder Sorbit ist.